Europäisches Patentamt

European Patent Office

Office européen des brevets

(11) Veröffentlichungsnummer: **0 207 338**
A2

# (12) EUROPÄISCHE PATENTANMELDUNG

(21) Anmeldenummer: 86108026.5

(22) Anmeldetag: 12.06.86

(51) Int. Cl.⁴: $G\ 01\ N\ 27/90$

(30) Priorität: 05.07.85 DE 3524106

(43) Veröffentlichungstag der Anmeldung:
07.01.87 Patentblatt 87/2

(84) Benannte Vertragsstaaten:
AT BE FR GB IT SE

(71) Anmelder: Thyssen Industrie AG
Am Thyssenhaus 1
D-4300 Essen 1(DE)

(72) Erfinder: Kreiskorte, Heinz, Dr.-Ing.
Limbecker Postweg 33
D-4600 Dortmund 30(DE)

(74) Vertreter: Freiherr von Schorlemer, Reinfried
Brüder-Grimm-Platz 4
D-3500 Kassel(DE)

(54) Oberflächenprüfeinrichtung.

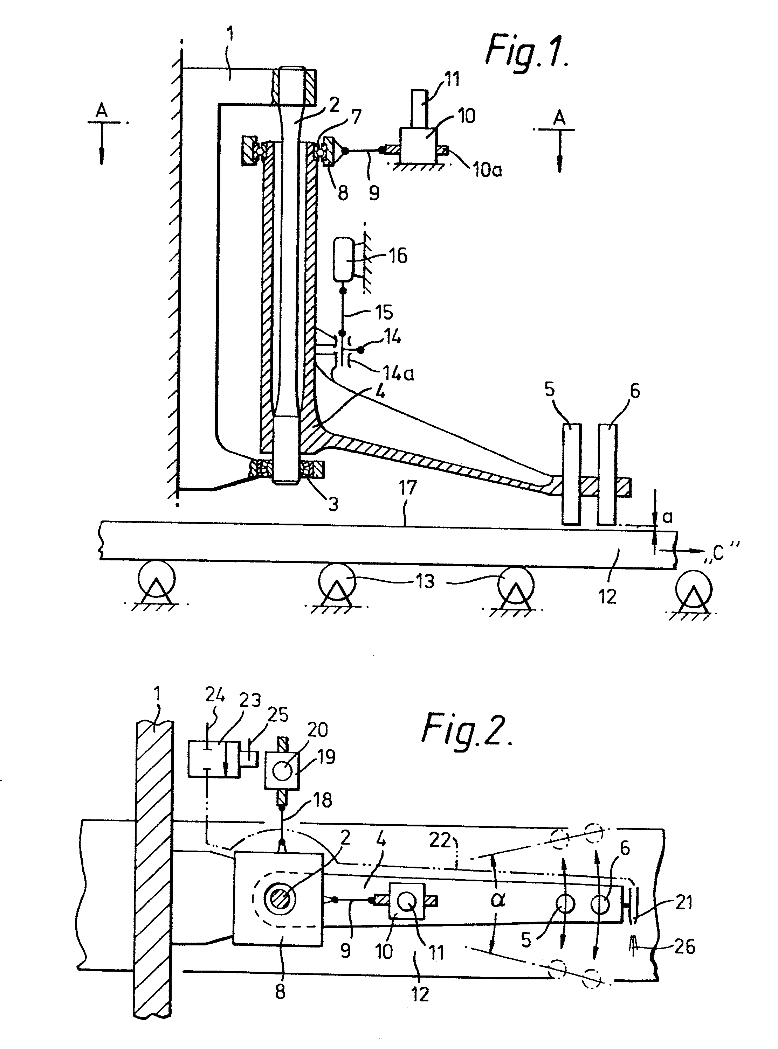

(57) Die Erfindung betrifft eine Oberflächenprüfeinrichtung, bei der Sensoren (5,6) mit einer hin- und hergehenden Bewegung über die zu prüfende Oberfläche geführt werden. Um die Kräfte, die zur Bewegung der Sensoren benötigt werden, möglichst klein zu halten, ist für diese Bewegung ein schwingungsfähiges System vorgesehen das mittels eines Erregersystems (14-16) bei oder in der Nähe seiner Eigenfrequenz betrieben wird (Figur 1).

Fig.1.

0207338

## Oberflächenprüfeinrichtung

Um Risse oder andere Oberflächenfehler in Flachstahlbrammen oder ähnlichen Produkten zu finden und zu lokalisieren, werden geeignete Sensoren eingesetzt. Diese Sensoren (beispielsweise auf Wirbelstrombasis entsprechend DE-OS 20 44 331) müssen meist nahe (z.B. bis zu 4 mm) über der Oberfläche angeordnet werden und haben nur einen kleinen Meßbereich. Um mit einem Sensor größere Oberflächenbereiche abtasten zu können, kann der Sensor über der kontinuierlich aus einer Stranggußanlage laufenden Bramme in einem gewissen Bereich hin- und herbewegt werden. Diese Bewegung kann zum Beispiel mit einem Kurbelantrieb erfolgen (DE-OS 27 46 618), der einen in Führungen laufenden Schlitten hin- und herbewegt.

Damit das Abtastraster eng genug wird, muß die Hin- und Herbewegung der Sensoren schnell erfolgen. Die dabei auftretenden Massenkräfte steigen quadratisch mit der Abtastfrequenz an und können sehr groß werden.

Der Erfindung liegt die Aufgabe zugrunde, die Massenkräfte, die in den für die Bewegung der Sensoren benutzten Einrichtungen und in den Antrieben auftreten, klein zu halten.

Erfindungsgemäß wird vorgeschlagen, zum Hin- und Herbewegen der Sensoren ein schwingungsfähiges System zu verwenden, das mittels eines Erregersystems in seiner Eigenfrequenz oder in deren Nähe betrieben wird. Da der Abstand der Sensoren zu der zu prüfenden Oberfläche in engen Toleranzen gehalten werden muß, wird zusätzlich vorgeschlagen, die Sensoren durch Verformen von elastischen Elementen in Höhe und Seitenneigung nachzuführen oder die Sensoren durch vorgespannte pneumatische oder hydrostatische Stützquellenlager auf konstantem Abstand zur zu prüfenden Oberfläche zu halten.

Weitere vorteilhafte Merkmale der Erfindung ergeben sich aus den Unteransprüchen.

Ausführungsbeispiele der Erfindung gehen aus den Abbildungen hervor. Es zeigen:

Fig. 1 eine Prüfeinrichtung auf der Basis eines Torsionsschwingsystems in Seitenansicht;

Fig. 2 einen Schnitt nach der Linie A-A in Fig. 1, jedoch mit einem anderen Erreger;

Fig. 3 den schematischen Aufbau der Prüfeinrichtung;

Fig. 4 den schematischen Aufbau der Prüfeinrichtung bei Höhenverstellung;

Fig. 5 den schematischen Aufbau der Prüfeinrichtung bei Seitenneigung;

Fig. 6 eine Prüfeinrichtung auf der Basis eines Blattfederschwingsystems in·der Draufsicht;

Fig. 7 die Prüfeinrichtung nach Fig. 6 in perspektivischer Darstellung;

Fig. 8 ein Torsionsschwingsystem mit elastischer Höhenvorspannung für ein Stützquellenlager;

Fig. 9 ein pneumatisches Stützquellenlager für den Sensor; und

Fig. 10 ein Schwingsystem, bei dem ein vorgespanntes Band mit Sensoren über der Oberfläche schwingt.

In Fig. 1 ist eine Prüfeinrichtung auf der Basis eines Torsionsschwingsystems von der Seite gesehen dargestellt. Bei diesem System ist ein Torsionsfederstab 2 an seinem oberen Ende in einem Grundgestell 1 fest eingespannt. Das untere Ende des Torsionsfederstabes 2 ist mit Hilfe eines Lagers 3 im Grundgestell 1 drehbar gelagert. Mit dem unteren Ende des Torsionsfederstabes 2 ist außerdem ein Schwingarm 4 fest verbunden. Der Schwingarm 4 seinerseits trägt einen Abstand-Sensor 5 und einen Riß-Sensor 6. Abstand- und Riß-Sensoren, vorzugsweise induktive oder mit Wirbelströmen arbeitende Sensoren, sind an sich bekannt (DE-OS'en 20 44 331, 27 46 618, 33 24 444 oder US-PS 4,258,319) und brauchen daher nicht näher erläutert werden. Am oberen Ende des Schwingarmes ist ein Lager 7 in einem frei beweglichen Lagergehäuse 8 angeordnet. Das Lagergehäuse 8 kann über ein vorzugsweise flexibles Verbindungsglied 9 mit Hilfe eines Hubgetriebes 10 bewegt werden. Das Hubgetriebe 10 wird von einem Motor 11 angetrieben und enthält beispielsweise ein von dem Motor 11 angetriebenes Ritzel od. dgl. (nicht gezeigt), das eine Zahnstange, Gewindespindel 10a od. dgl. antreibt. Die Teile 9,10 und 11 bilden eine erste Verstellvorrichtung für den Schwingarm 4.

Unter der Prüfeinrichtung ist ein zu prüfendes Werkstück 12 angeordnet, das kontinuierlich über Rollen 13 in Pfeilrichtung "C" gefördert wird.

Die Prüfeinrichtung wird mit Hilfe eines Fliehkraft-Erregersystems in Resonanz gefahren. Dieses enthält einen Fliehkrafterreger 14, beispielsweise in Form eines Exzenters, der in einem am Schwingarm 4 befestigten Lager 14a drehbar gelagert und an einer biegsamen Welle oder einer Gelenkwelle 15 befestigt ist, die von einem regelbaren Motor 16 angetrieben wird.

Beim Betrieb der Prüfeinrichtung schwingt der Schwingarm 4 mit den Sensoren 5 und 6 im Abstand "a" über einer Oberfläche 17 des zu prüfenden Werkstückes 12 hin und her. Wird nun gleichzeitig das Werkstück 12 kontinuierlich in Richtung eines Pfeils "C" bewegt, so wird die zu prüfende Oberfläche 17 zeilenförmig abgetastet. Der Torsionsfederstab 2, der Schwingarm 4 und die Sensoren 5,6 bilden ein mechanisches, schwingungsfähiges System, das vom Erregersystem 14,14a,15,16 mit seiner Resonanzfrequenz oder einer in der Nähe derselben liegenden Frequenz angetrieben wird.

Fig. 2 zeigt eine Prüfeinrichtung entsprechend dem Schnitt A-A von Fig. 1. Anstelle des Fliehkraft-Erregersystems 14, 14a, 15, 16 wird hier ein anderes Erregersystem zur Anregung des in Resonanz oder in der Nähe der Resonanz schwingenden Schwingungssystems benutzt.

Eine Luftdüse 21 wird über eine Luftleitung 22 und ein Ventil 23 mit Luft, die über eine Druckleitung 24 zugeführt wird, versorgt. Schaltet man das Ventil 23 über eine elektrische Leitung 25 mit der dem Schwingsystem eigenen Eigenfrequenz auf und zu, so tritt an der Luftdüse 21 im Takt der Schaltfrequenz ein Luftstrom 26 aus, der an der Luftdüse 21, die mit dem Schwingarm 4 verbunden ist, jeweils einen Rückstoß erzeugt. Dieser Rückstoßimpuls reicht aus, um z.B. beim nachfolgend beschriebenen speziellen Schwingsystem einen Schwingweg der Sensoren 5 und 6 von 300 mm zu erzeugen.

Wird für den aus Stahl gefertigten Torsionsfederstab 2 ein Durchmesser von 25 mm und eine Länge von 600 mm gewählt, so ergibt sich eine Drehfederzahl (Direktionsmoment) von z.B. $c = 5,16 \times 10^3$ Nm. Das Massenträgheitsmoment des Schwingsystems um die Achse des Torsionsfederstabs 2 ergibt sich im wesentlichen aus der Masse der Sensoren 5 und 6. Hinzukommt das Massenträgheitsmoment des Schwingarms 4. Unterstellt man, bezogen auf einen Schwingradius von einem Meter eine auf diesen Radius bezogene reduzierte Masse von 5 kg, so ergibt sich ein Massenträgheitsmoment von $\Theta = 5$ Nms$^2$.

Aus der Drehfederzahl c und dem Massenträgheitsmoment $\Theta$ errechnet sich die Eigenfrequenz zu $f_0 = \frac{1}{2\pi} \sqrt{\frac{c}{\Theta}} = 5,1$ Hz. Wird ein solches Schwingsystem in der Nähe der Eigenfrequenz erregt, so ergibt sich eine erhebliche Resonanzüberhöhung, d.h. die zum Anregen bzw. Antrieb des Schwingsystems benötigte Kraft ist wesentlich kleiner als die zum Bewegen der Massen erforderliche Kraft.

Wird das oben beschriebene schwingungsfähige System mit der Eigenfrequenz von $f_0 = 5,1$ Hz mit einer Frequenz von 5 Hz angeregt, so beträgt, die Dämpfung einmal vernachlässigt, die Resonanzüberhöhung $V = \frac{1}{1-(f/f_0)^2} = 25,7$. Zum Antrieb des Prüfsystems wird daher eine Kraft benötigt, die nur etwa 1/25 der zum Hin- und Herbewegen der Massen erforderlichen Kraft beträgt.

In Fig. 2 ist zusätzlich zu dem in Fig. 1 beschriebenen ersten Verstellsystem 9,10,11 eine zweite Verstellvorrichtung 18,19,20 für den Schwingarm 4 vorgesehen, mit der das bewegliche Lagergehäuse 8 seitlich verschoben werden kann und die wie die erste Verstellvorrichtung ein vorzugsweise flexibles Verbindungsglied 18, ein Hubgetriebe 19 und einen Antriebsmotor 20 aufweist.

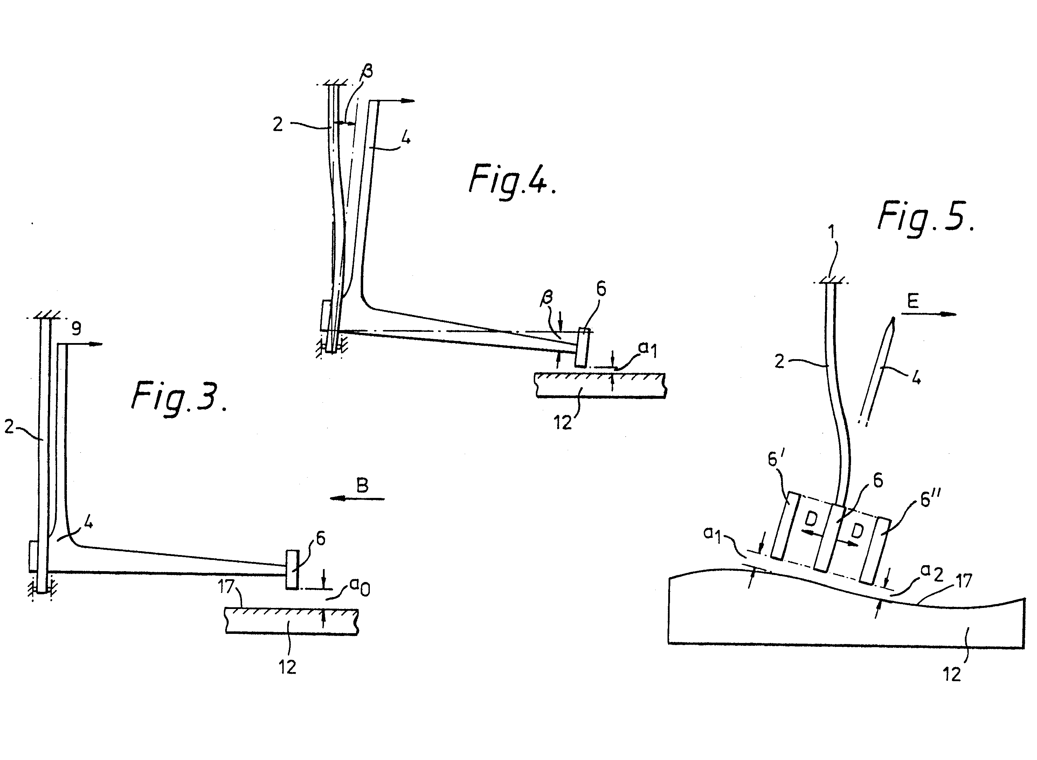

Da der Abstand "a" möglichst genau einzuhalten ist, müssen die Sensoren 5 und 6, wenn das Werkstück gewisse Höhenabweichungen hat, in der Höhe verstellt werden. Soll der Abstand "a" kleiner werden, so wird mit Hilfe des Motors 11, des Hubgetriebes 10 und des Verbindungsglieds 9 das Lagergehäuse 8 nach rechts gezogen, wie nachstehend anhand der Fig. 3 bis 5 näher beschrieben wird, in denen der Verstellvorgang übertrieben groß und schematisch dargestellt ist. Der Schwingarm 4 wird dadurch geringfügig um das untere Lager 3 nach rechts gekippt (Fig. 1), das beispielsweise als Tonnenlager od. dgl. ausgebildet ist und geringfügige Verschwenkungen des Torsionsfederstabs 2 zuläßt. Gleichzeitig wird dabei der Torsionsfederstab 2 verbogen.

Die Anordnung nach Fig. 3 zeigt den Ausgangszustand, bei dem der Sensor 6 einen Abstand "$a_0$" zur zu prüfenden Oberfläche 17 des Werkstücks 12 hat.

Wird nun entsprechend Fig. 4 das obere Lagergehäuse 8 des Schwingarmes 4 nach rechts bewegt, so stellt sich das untere Ende des Torsionsstabes 2 um den Winkel ß schräg. Um den gleichen Winkel wird der Schwingarm 4 in Richtung zum Werkstück 12 gekippt, und der Abstand "$a_0$" verkleinert sich auf "$a_1$".

Wenn die Oberfläche des zu prüfenden Werkstückes 12 nicht nur in der Höhe, sondern auch in der Seitenneigung unterschiedlich sein kann, wird vorgeschlagen, den Torsionsfederstab 2 auch in Querrichtung zu verbiegen.

Fig. 5 zeigt die Prüfeinrichtung in Richtung des Pfeils "B" in Fig. 3. Der Querschnitt des zu prüfenden Werkstücks 12, das sich kontinuierlich aus der Bildebene nach vorn erstreckt, hat beispielsweise die gezeichnete Kontur. Damit der in Richtung von Pfeilen "D" quer schwingende Sensor 6 weitgehend den gleichen Abstand "a" zur Oberfläche 17 hat, muß das schwingungsfähige System in Richtung des Pfeils "E" ausgelenkt werden. Der Sensor 6 bewegt sich dann bei der Schwingbewegung in die Endpositionen 6' und 6". Das wird dadurch erreicht, daß der Torsionsfederstab 2 neben der Torsionsbewegung noch quer verbogen wird. Die dazu notwendigen Elemente (Fig. 2) sind das Verbindungsglied 18, das Hubgetriebe 19 und der Motor 20 der zweiten Verstellvorrichtung sowie das Lagergehäuse 8, wobei das Lager 7 vorzugsweise ebenfalls als Tonnenlager od. dgl. ausgebildet ist.

Die Verstellung des Abstandes "a" in Höhenrichtung kann bei schwankender Kontur des Werkstücks 12 mit Hilfe eines Regelkreises erfolgen, wobei der jeweilige Abstand zur Oberfläche 17 mit dem Abstand-Sensor 5 ermittelt wird. Der dabei gemessene Abstand-Istwert wird mit einem Sollwert verglichen. Bei Abweichungen zwischen Soll- und Istwert wird mit Hilfe der ersten Verstellvorrichtung 9,10,11 eine Höhenkorrektur vorgenommen.

Entsprechend ist es auch möglich, die Seitenneigung zu korrigieren. Dazu werden in der jeweiligen Endposition der hin- und herschwingenden Sensoren die Abstände "$a_1$" und "$a_2$" ermittelt. Wenn "$a_1$" und "$a_2$" nicht gleich sind, erfolgt über einen geschlossenen Regelkreis mit der zweiten Verstellvorrichtung 18,19,20 eine entsprechende Korrektur.

Im Beispiel nach Fig. 1 wurde für die Erregung des Schwingsystems ein Fliehkrafterreger 14 eingesetzt. Der Fliekrafterreger 14 wird z.B. von einem regelbaren Motor 16 über eine Gelenkwelle 15 angetrieben. Bei einem solchen System ist es zweckmäßig, wie z.B. bei Resonanzprüfmaschinen, im ansteigenden Ast der Resonanzkurve zu arbeiten. Die Schwingamplitude kann dabei mit Hilfe von Torsions-Dehnungsmeßstreifen, die auf dem Torsionsfederstab 2 angeordnet sind, gemessen und mittels eines Regelkreises konstant gehalten werden.

Das Schwingsystem kann jedoch auch durch andere Einrichtungen angeregt werden, zum Beispiel über einen Federkrafterreger oder ein Luftimpulssystem (z.B. Fig. 2).

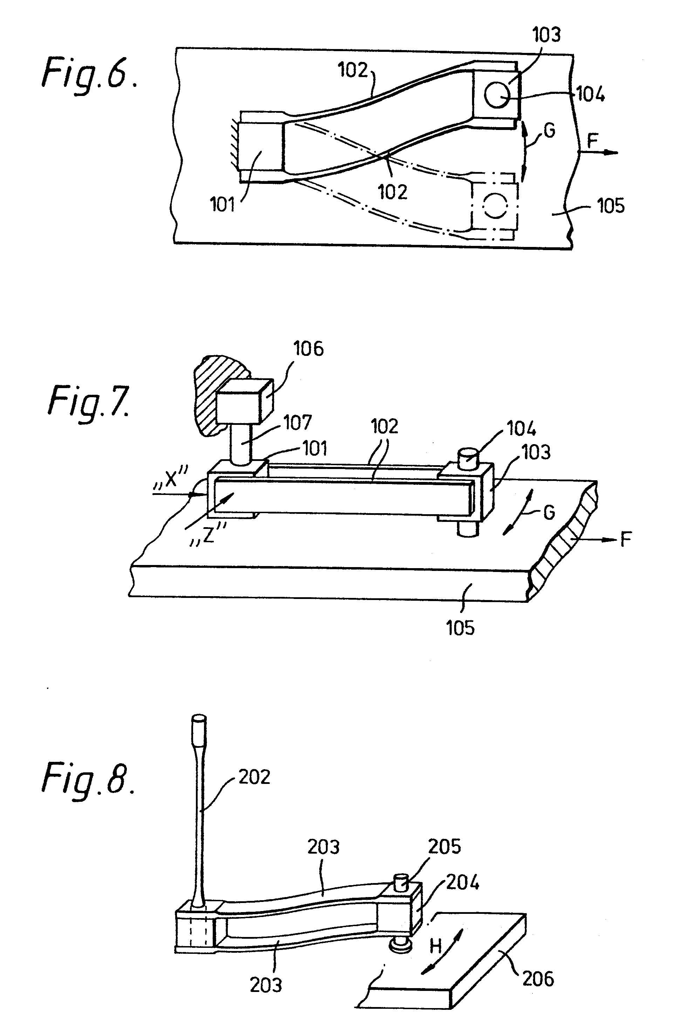

Ein anderes Beispiel für ein Schwingsystem ist in Fig. 6 und Fig. 7 dargestellt. An einem Befestigungsstück 101 sind Blattfedern 102 befestigt, die ihrerseits einen Halter 103 für einen Sensor 104 tragen. Ein zu prüfendes Werkstück 105 bewegt sich kontinuierlich in Pfeilrichtung "F". Das Erregersystem, das dafür sorgt, daß das System schwingt und sich in Pfeilrichtung "G" bewegt, ist nicht eingezeichnet. Es kann beispielsweise entsprechend Fig. 1 und 2 ausgebildet sein.

In Fig. 7 ist dargestellt, wie Höhe und Seitenneigung verstellt werden können. Wird das Schwingsystem in Pfeilrichtung "X" belastet, so verbiegt sich ein zwischen einer starren Halterung 106 und dem Befestigungsstück eingespanntes biegeelastisches Glied 107 etwas und der Sensor 104 wird geringfügig nach oben bewegt. Bei Krafteinleitung in Pfeilrichtung "Z" wird das System schräggestellt. so daß der Sensor 104 einer entsprechend geneigten Oberfläche folgen kann.

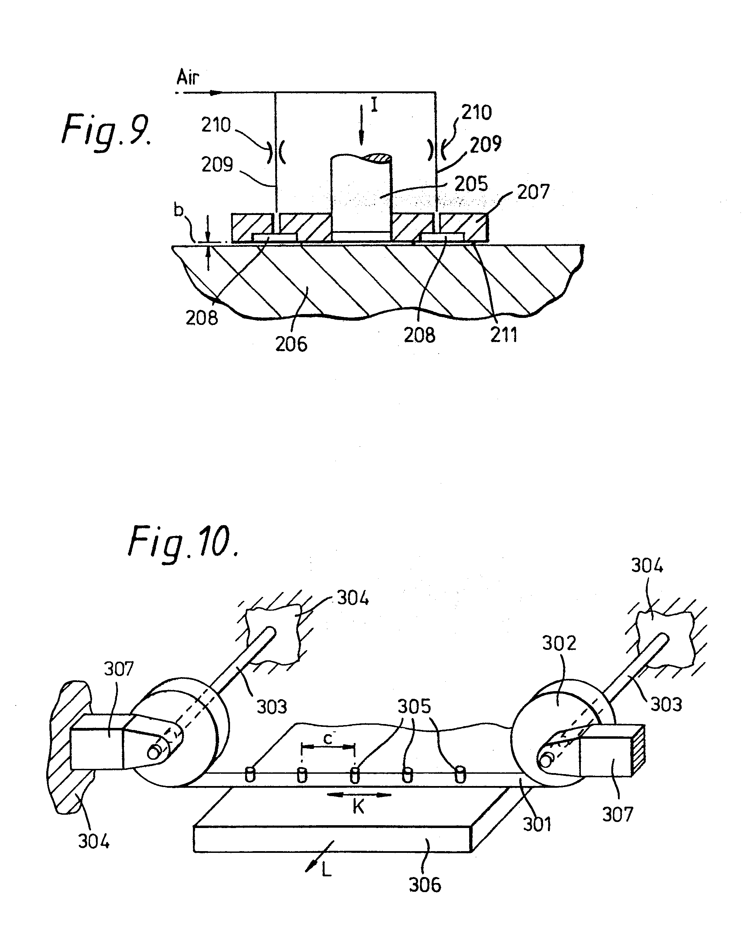

Fig. 8 und Fig. 9 zeigen eine Anordnung, bei der ein Sensor 205 in seinem Abstand zur Prüfkörperoberfläche über eine vorgespannte Stützlagerung auf Abstand gehalten wird.

In Fig. 8 bilden ein Torsionsfederstab 202 und die in Pfeilrichtung "H" schwingenden Massen wieder ein schwingungsfähiges System. Der Schwingarm 4 (Fig. 1) besteht bei dieser Ausführung aus einem Blattfederpaar 203. Dieses Blattfederpaar trägt einen Halter 204 mit dem Sensor 205. Die Blattfedern 203 sind so angeordnet, daß sie etwas nach oben durchgebogen sind und den Sensor 205 auf ein Werkstück 206 drücken.

Da diese Anordnung Reibung zwischen dem Sensor 205 und der zu prüfenden Oberfläche des Werkstücks 206 erzeugen würde, ist eine pneumatische Stützlagerung vorgesehen, die dafür sorgt, daß mit Hilfe eines Luftpolsters und gegen die Federkraft der Blattfedern 203 ein Abstand "b" zwischen dem Sensor 205 und dem Werkstück 206 erzeugt wird (Fig. 9). Dadurch schwimmt der Sensor 205
auf einem Luftpolster über der zu prüfenden Oberfläche und läßt
sich weitgehend reibungsfrei bewegen.

Fig. 9 zeigt ein bevorzugtes Ausführungsbeispiel für eine Stützlagerung. Mit dem Sensor 205 ist eine Stützscheibe 207 verbunden. In diese Stützscheibe 207 sind, auf ihrem Umfang verteilt,
mehrere Lufttaschen 208 eingearbeitet. In jede dieser Lufttaschen 208 wird über Leitungen 209 und gegebenenfalls Drosseln 210
Luft eingeblasen. Die Luft hebt die Stützscheibe 207 gegen die
Kraft "I", die von den Blattfedern 203 erzeugt wird, an. Dabei
entsteht ein Spalt "b", über den die Luft nach außen abfließt.
Die Drosseln 210 und der Spalt "b" zwischen Stützscheibe 207 und
der zu prüfenden Oberfläche bilden dabei eine Art Brückenschaltung, die den Druck in den Taschen 208 selbsttätig regelt. Anstelle der Drossel 210 können die Luftleitungen 209 so dünn ausgeführt werden, daß sie die gewünschte Drosselwirkung haben.

Damit sich der Sensor jeder Oberflächenneigung anpassen kann,
ist es zweckmäßig, die in Pfeilrichtung "I" wirkende Kraft über
eine kardanische Aufhängung einzuleiten.

Die Vorspannung für die Stützlager kann auch durch Magnete erzeugt werden. Diese Vorspannung ersetzt dann die Kraft "I", die
durch die Blattfedern 203 aufgebracht wird.

In Fig. 10 ist ein schwingungsfähiges System dargestellt, bei
dem ein vorgespanntes Stahlband 301 auf drehbar gelagerten Scheiben 302 aufgespannt ist. Die Scheiben 302 sind über Torsionsfederstäbe 303 mit einem Maschinengehäuse 304 verbunden und in Lagern 307 drehbar gelagert. Dadurch entsteht ein schwingungsfähiges System, wobei die beiden Scheiben 302 und die Torsionsstäbe 303 gleichsinnige Drehschwingungen ausführen. Bei diesen Drehschwingungen wird das Stahlband 301 in Pfeilrichtung "K" hin-
und herbewegt. Die Vorspannung im Stahlband 301 wird dabei dadurch erzeugt, daß zumindest einer der Torsionsfederstäbe 303
in der Ruhelage des Stahlbandes 301 um einen gewissen Winkel verdreht ist.

9

Werden im Stahlband 301 Sensoren 305 - in Schwingrichtung hintereinander - im Abstand "c" angeordnet, so wird bei einer Schwingbewegung des Stahlbandes 301 mit einer Doppelamplitude, die etwas größer als der Abstand "c" ist, die gesamte Breite des zu prüfenden Werkstückes 306 abgetastet. Die Prüfeinrichtung nach Fig. 10 eignet sich vor allem für die Abtastung von vergleichsweise breiten Werkstücken 306, z.B. ca. zwei Meter breiten Flachstahlbrammen, die senkrecht zur Schwingrichtung bewegt werden.

Wird das Werkstück zusätzlich in Pfeilrichtung "L" bewegt, so wird die gesamte Oberfläche zeilenförmig auf Risse oder Überflächenfehler überwacht.

Die Erfindung bringt den wesentlichen Vorteil mit sich, daß nur vergleichsweise kleine Kräfte benötigt werden, um das schwingungsfähige System zu erregen bzw. in Erregung zu halten, sofern die Schwingung mit der Resonanzfrequenz oder mit einer in deren Nähe liegenden Frequenz erfolgt. Dazu kommt der Vorteil, daß die Torsionsfederstäbe (z.B. Fig. 1 bis 5) bzw. Federn (z.B. Fig. 6 bis 9) zwecks Änderung des Abstands zwischen den Sensoren und dem Werkstück entweder selbst verbogen werden oder an leicht biegbaren Elementen aufgehängt sind, so daß für die Verstellung keine zusätzlichen Lager oder Massen benötigt werden. Dadurch lassen sich ohne weiteres Schwingungsfrequenzen von mindestens 5 Hz erzeugen, die erforderlich sind, um ein mit einer Geschwindigkeit von z.B. 20 mm/Sec. bewegtes Werkstück 12 bei einer Doppelamplitude der Schwingung von z.B. 4 mm fünfmal pro Sekunde abzutasten, ohne daß Teile seiner Oberfläche ungeprüft bleiben.

THYSSEN INDUSTRIE AG, D-4300 Essen 0207338
Patentansprüche

1) Oberflächenprüfeinrichtung, bei der Sensoren mit einer hin- und hergehenden Bewegung über die zu prüfende Oberfläche geführt werden, dadurch gekennzeichnet, daß für die Bewegung der Sensoren (5,6,104,205,305) ein schwingungsfähiges System vorgesehen ist, das mittels eines Erregersystems (14-16 bzw. 21-26) bei oder in der Nähe seiner Eigenfrequenz betrieben wird.

2) Oberflächenprüfeinrichtung nach Anspruch 1, dadurch gekennzeichnet, daß das schwingungsfähige System als Torsionsschwingsystem aufgebaut ist, bestehend aus einem Torsionsfederstab (2,202) und einem damit verbundenen Schwingarm (4,203), an dessen Ende wenigstens ein Sensor (5,6,205) angebracht ist.

3) Oberflächenprüfeinrichtung nach Anspruch 1, dadurch gekennzeichnet, daß das schwingungsfähige System aus mindestens einer Blattfeder (102) aufgebaut ist.

4) Oberflächenprüfeinrichtung nach Anspruch 1, dadurch gekennzeichnet, daß mit einem Torsionsschwingsystem (302,303) ein Band (301) angetrieben wird, an dem wenigstens ein Sensor (305) angeordnet ist.

5) Oberflächenprüfeinrichtung nach den Ansprüchen 1 bis 4, dadurch gekennzeichnet, daß die Schwingamplitude des schwingungsfähigen Systems gemessen und geregelt wird.

6) Oberflächenprüfeinrichtung nach den Anspüchen 1 bis 5, dadurch gekennzeichnet, daß das schwingungsfähige System zur Veränderung des Abstands zwischen den Sensoren (5,6,104,205,305) und dem Werkstück (12,105,206,306) wenigstens ein elastisches Element (2,107, 203,301) aufweist.

7) Oberflächenprüfeinrichtung nach einem oder mehreren der vorgenannten Ansprüche, dadurch gekennzeichnet, daß das schwingungsfähige System zur Veränderung der Seitenneigung der Sensoren (5,6,105,305) wenigstens ein elastisches Element (2,107,301) aufweist.

8) Oberflächenprüfeinrichtung nach Anspruch 6 oder 7, dadurch gekennzeichnet, daß das elastische Element für die Veränderung des Abstands und/oder die Veränderung der Seitenneigung der Torsionsfederstab (2) ist.

9) Oberflächenprüfeinrichtung nach den Ansprüchen 6 bis 8, dadurch gekennzeichnet, daß zur Veränderung des Abstandes eine erste Verstellvorrichtung (9,10,11) vorgesehen ist.

10) Oberflächenprüfeinrichtung nach den Ansprüchen 6 bis 9, dadurch gekennzeichnet, daß zur Veränderung der Seitenneigung eine zweite Verstellvorrichtung (18,19,20) vorgesehen ist.

11) Oberflächenprüfeinrichtung nach Anspruch 9 oder 10, dadurch gekennzeichnet, daß die erste und/oder zweite Verstellvorrichtung mittels eines Regelkreises regelbar ist.

12) Oberflächenprüfeinrichtung nach den Ansprüchen 1 bis 8, dadurch gekennzeichnet, daß Sensoren (6,104,205,305) mit federnden Elementen (2,107,203,301) auf die zu prüfende Oberfläche gedrückt werden.

13) Oberflächenprüfeinrichtung nach Anspruch 12, dadurch gekennzeichnet, daß Sensoren (6,104,205,305) mit Hilfe von pneumatischen oder hydraulischen Stützlagern (207,208,209,210) über der zu prüfenden Oberfläche schwimmen.

14) Oberflächenprüfeinrichtung nach einem oder mehreren der vorgenannten Ansprüche, dadurch gekennzeichnet, daß Sensoren (6,104, 205,305) magnetisch in Richtung auf die Oberfläche gezogen und mit Hilfe von pneumatischen oder hydraulischen Stützquellenlagern (207,208,209,210) in geringem Abstand über der zu prüfenden Oberfläche gehalten werden.

15) Oberflächenprüfeinrichtung nach Anspruch 1 bis 14, dadurch gekennzeichnet, daß das Erregersystem eine Rückstöße erzeugende, an eine Druckluftleitung (24) angeschlossene Luftdüse (21) auf-

weist und ein Ventil (23) in der Druckluftleitung (24) angeordnet ist, das mit der Eigenfrequenz des schwingungsfähigen Systems oder mit einer in deren Nähe liegenden Frequenz ein- und
ausgeschaltet wird.

0207338

1/4

Fig.1.

Fig.2.

Fig.5.

Fig.4.

Fig.3.

Fig.6.

Fig.7.

Fig.8.

**Fig.9.**

**Fig.10.**